# EUROPEAN PATENT APPLICATION

(11) **EP 4 716 311 A1**
(43) Date of publication of application: **25.03.2026**
(21) Application number: 24818423.6
(22) Date of filing: 07.05.2024
(51) Int. Cl.: H04W 52/02

(54) **TRACKING AND POSITIONING CONTROL METHOD, TERMINAL, AND COMPUTER-READABLE STORAGE MEDIUM**

(30) Priority: 09.06.2023 CN 202310687155
(71) Applicant: ZTE CORPORATION, Shenzhen, Guangdong 518057 (CN)
(72) Inventor: YUAN, Gang, Shenzhen, Guangdong 518057 (CN)
(74) Representative: Canzler & Bergmeier Patentanwälte Partnerschaft mbB
(86) International application number: PCT/CN2024/091341
(87) International publication number: WO 2024/250889

(57) **Abstract**

The present disclosure relates to the technical field of the Internet of Things, and provided thereby are a tracking and positioning control method, a terminal, and a computer-readable storage medium. The method comprises: when a positioning condition is met, controlling a positioner to be powered on, and once the positioner is controlled to be powered on, controlling the positioner to be started; and the positioner performing positioning, once the positioning is finished, controlling the positioner to be shut down, and once the positioner is controlled to be shut down, controlling the positioner to be powered off.

## Description

### CROSS REFERENCE TO RELATED APPLICATIONS

The present disclosure claims the priority to Chinese Patent Application No. 202310687155.6 filed on June 9, 2023, the contents of which are incorporated herein by reference in their entirety.

### TECHNICAL FIELD

The present disclosure relates to the technical field of the Internet of Things (IoT), and in particular, to a tracking and positioning control method, a terminal, and a computer-readable storage medium.

### BACKGROUND

With the development of the IoT technology, tracking and positioning demands involved in the IoT are becoming more and more extensive. Ordinary tracking and positioning devices adopt a development mode in which an Open Central Processing Unit (OpenCPU) is provided and a micro controller unit (xMCU) is connected outside a module. Regardless of the development mode, a positioning module (i.e., a tracker) included in a tracking and positioning device generally operates directly upon a battery being installed, that is, the positioning module is to start to operate once the battery is installed, even if the tracking and positioning device is in an idle state or in sleep mode, a power consumption due to a standby current during the sleep mode and a power consumption due to a leakage current are caused, with the standby current being a minimum current during the device being completely in sleep, and the power consumption generally being in order of milliampere (mA) or ampere (A). Due to the existence of the power consumption caused by the standby current and the power consumption caused by the leakage current, electric energy resources of the battery are wasted.

Further, the tracker is a terminal device which reports acquired information including current Global Positioning System (GPS) information, surrounding WiFi information, or base station information. For the timing of reporting data, the tracker generally adopts the following methods: 1) periodically positioning; or 2) positioning in response to triggering (e.g., triggering by a key or Bluetooth Low Energy (BLE)). During the tracker adopting the method of periodically positioning, if a time interval for positioning is relatively small, resulting the power consumption being raised, and standby days of the device are significantly reduced; and if the time interval for positioning is relatively large, a position of the tracker cannot be obtained in time, resulting in relatively low positioning accuracy. During the tracker adopts the method of positioning in response to triggering, the triggering is to be performed constantly. In a case where a position of the device frequently changes, e.g., a motion trajectory of the device may cross an obstacle, positioning is to be triggered in time based on complexity of the motion trajectory, but frequently triggering positioning not only causes poor user experience, but also increases the power consumption of the positioning module. In addition, if positioning is not triggered in time, the position of the tracker cannot be obtained in time, resulting in relatively low positioning accuracy. Therefore, the above methods of positioning for the tracker cannot achieve a good balance between timeliness of positioning and the power consumption.

### SUMMARY

In a first aspect, the present disclosure provides a tracking and positioning control method, including: in response to a positioning condition being met, controlling a tracker to be powered on, and controlling the tracker to be started up after the tracker is powered on; and performing positioning by the tracker, controlling the tracker to be shut down in response to the positioning being completed, and controlling the tracker to be powered off after the tracker is shut down.

In a second aspect, the present disclosure further provides a terminal, including a processor, a memory, a computer program which is stored by the memory and is executable by the processor, and a data bus for enabling connection and communication between the processor and the memory, and the computer program is executed by the processor to cause the processor to implement the tracking and positioning control method provided herein.

In a third aspect, the present disclosure further provides a computer-readable storage medium stored with at least one computer program, the at least one computer program is executable by at least one processor to cause the at least one processor to implement the tracking and positioning control method provided herein.

### BRIEF DESCRIPTION OF DRAWINGS

FIG. 1 is a schematic flowchart illustrating a tracking and positioning control method according to an embodiment of the present disclosure;
FIG. 2 is a schematic structural diagram of a device applying a tracking and positioning control method according to an embodiment of the present disclosure;
FIG. 3 is a schematic structural diagram of a conventional device related to a tracking and positioning control method according to an embodiment of the present disclosure;
FIG. 4 is a schematic flowchart illustrating specific operations of a tracking and positioning control method according to an embodiment of the present disclosure;
FIG. 5 is a flowchart of controlling a tracker to be started up and shut down in a tracking and positioning control method according to an embodiment of the present disclosure;
FIG. 6 is a sub-flowchart of a tracking and positioning control method according to an embodiment of the present disclosure; and
FIG. 7 is a block diagram of a terminal according to an embodiment of the present disclosure.

### DETAIL DESCRIPTION OF EMBODIMENTS

The technical solutions provided in the embodiments of the present disclosure will be clearly and completely described below in conjunction with the drawings for the embodiments of the present disclosure. Apparently, the embodiments described herein are merely some embodiments of the present disclosure, rather than all embodiments. All other embodiments derived by those of ordinary skill in the art from the embodiments described herein without any creative work fall within the scope of the present disclosure.

The flowcharts shown in the drawings are merely for illustration, and do not indicate that all the contents and operations must be included or must be performed in the order described therein. For example, some operations may be separated, combined or partially merged, so that an actual execution order may be changed according to actual situations.

It should be understood that the terms used herein are merely for the purpose of describing specific embodiments but are not intended to limit the present disclosure. As used in the description and the appended claims of the present disclosure, "a", "one", and "the" which indicate a singular form are intended to include a plural form, unless expressly stated in the context.

The embodiments of the present disclosure provide a tracking and positioning control method, a terminal, and a storage medium. The tracking and positioning control method is applicable to, but not limited to, a tracking and positioning terminal in the IoT to enable the terminal to perform positioning with relatively lower power consumption, thereby prolonging the standby time duration of a positioning device.

In view of the problem in the related technology that the electric energy resources of the battery are wasted due to the existence of the power consumption caused by the standby current and the power consumption caused by the leakage current, the tracking and positioning control method according to the embodiment of the present disclosure is proposed, and a core concept of the embodiment of the present disclosure is as follows: controlling a tracker to be powered on and started up in response to positioning being desired, and controlling the tracker to be shut down and powered off in response to positioning being not desired, so as to eliminate the power consumption caused by the standby current and the power consumption caused by the leakage current, thereby reducing the power consumption of the positioning module and prolonging the standby time duration of the device.

In some implementations, a frequency of positioning of a device is automatically adjusted based on a motion state of the device, so as to achieve a good balance between timeliness of positioning and the power consumption, and further reduce the power consumption in a case of ensuring that a motion trajectory of the device is not lost.

Some implementations of the present disclosure are described in detail below with reference to the drawings. The following implementations and the technical features therein can be combined with each other if no conflict is incurred.

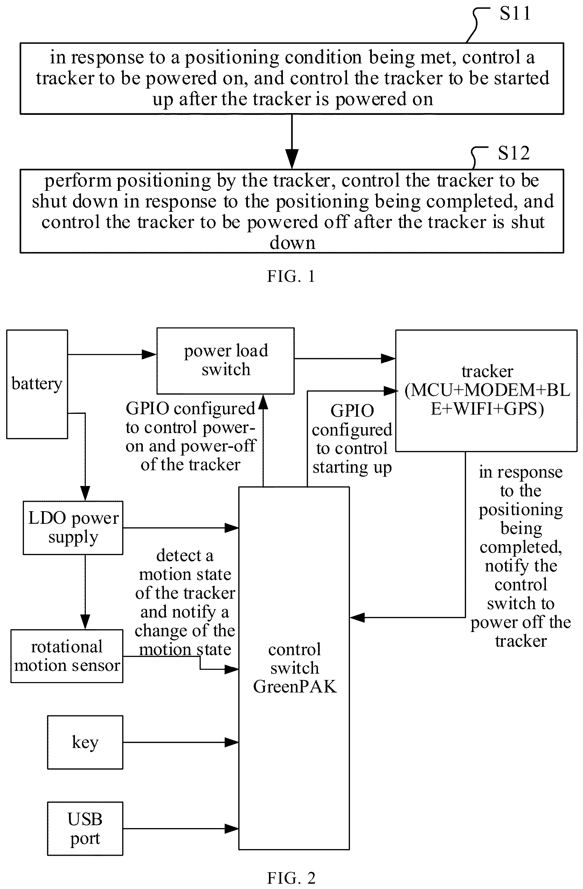

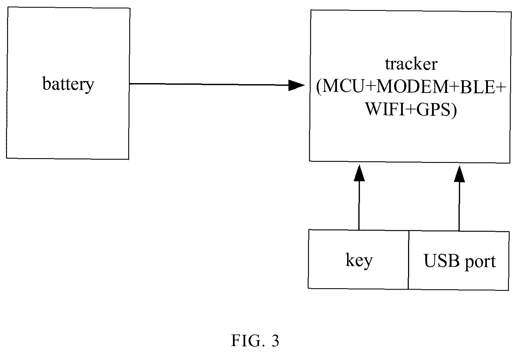

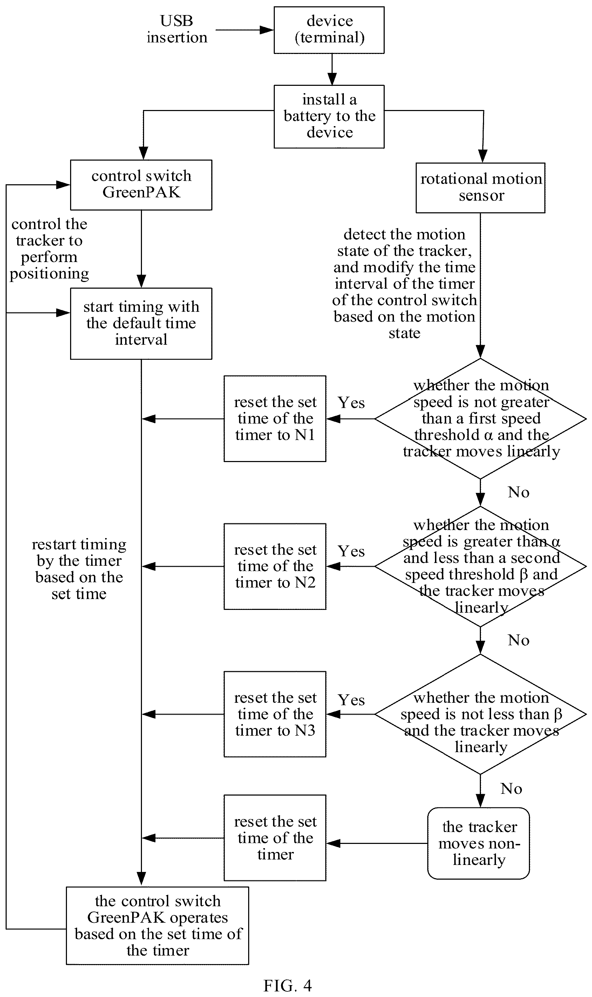

Reference may be made to FIG. 1 to FIG. 4, FIG. 1 is a schematic flowchart illustrating a tracking and positioning control method according to an embodiment of the present disclosure, FIG. 2 is a schematic structural diagram of a device applying a tracking and positioning control method is applied according to an embodiment of the present disclosure, FIG. 3 is a schematic structural diagram of a conventional device related to a tracking and positioning control method according to an embodiment of the present disclosure, and FIG. 4 is a schematic flowchart illustrating specific operations of a tracking and positioning control method according to an embodiment of the present disclosure. As shown in FIG. 1, the tracking and positioning control method includes, but not limited to, following operations S11 and S12.

At operation S11, in response to a positioning condition being met, a tracker is controlled to be powered on, and the tracker is controlled to be started up after the tracker is powered on.

In some implementations, referring to FIG. 4, the tracker may be controlled by, but not limited to, adding a control switch, the control switch may be configured to control the tracker to be powered on (supplied with power) or powered off (disconnected from power), the control switch may be further configured to control the tracker to be started up, and the control switch may be, but not limited to, a control logic circuit GreenPAK. Illustratively, referring to FIG. 2 and FIG. 3, a control switch GreenPAK is electrically connected to a power load switch, and is also electrically connected to the tracker. Based on the control switch, in response to the positioning condition being met, the tracker is to perform positioning. For example, in response to a host device that the tracker belongs to being started up or a motion state of the tracker being changed, it is determined that the positioning condition is met, and in this case, the control switch may control the tracker to be powered on via, but not limited to, a GPIO configured to control power-on and power-off of the tracker, and after the tracker is powered on, the control switch may control the tracker to be started up via, but not limited to, a GPIO configured to control starting up of the tracker. The GPIO is an abbreviation for General Purpose Input/Output (GPIO), and the output and input (i.e., pins) of the GPIO may be controlled by software, that is, the pins may be read or written by controlling the pins to be at a high or low level.

In some implementations, the positioning condition being met includes: reaching a set time of a timer.

In some implementations, the timer is set based on the control switch, which is not limited thereto, the set time of the timer may be, but not limited to, a time interval of 3 minutes, a time interval of 5 minutes, or a time interval of 10 minutes, and in a case where the control switch is the control logic circuit GreenPAK and the timer is set by the control switch, the set time of the timer may be modified via a serial port based on a Micro Controller Unit (MCU). In a case where the tracker is controlled based the control switch and the timer is set by the control switch, the control switch controls positioning based on the timer, that is, the control switch controls the tracker to perform positioning, in response to the set time of the timer being reached, by controlling the tracker to be powered on and started up after being powered on. In a case where positioning is not to be performed, the tracker is shut down and powered off, so that the power consumption due to the standby current and the power consumption due to the leakage current are avoided in a case where positioning is not to be performed, the power consumption of the positioning module is reduced, and the standby time duration of the device is prolonged.

Still referring to FIG. 2 and FIG. 4, as shown in FIG. 2, the tracker is in a shutdown state in a case of not performing positioning, and the tracker is controlled by a power load switch to be powered off, and merely a rotational motion sensor and the control switch GreenPAK are kept in a power-on state by a Low Dropout Regulator (LDO) power supply, so that the power consumption due to the standby current and the power consumption due to the leakage current are avoided, the power consumption of the positioning module is reduced, and the standby time duration of the device is prolonged. In a case where the set time of the timer of the control switch GreenPAK is reached, the control switch GreenPAK turns on the power load switch via the GPIO, which is configured to control power-on and power-off of the tracker, to power on the tracker, with the power load switch being connected to a battery power, but the tracker is not started up at this time, and after the tracker is powered on, the control switch GreenPAK controls the tracker to be started up via the GPIO configured to control starting up of the tracker. In this way, the tracker in a power-off and shutdown state is powere
d on and started up by the control switch GreenPAK, and thus enters an operating state.

At operation S 12, the tracker performs positioning, the tracker is controlled to be shut down after the positioning is completed, and the tracker is controlled to be powered off after the tracker is shut down.

In some implementations, still referring to FIG. 4, the tracker performs positioning, a process of performing positioning by the tracker may be not different from a conventional process, and a main improvement lies in that the tracker is controlled to be shut down after the positioning is completed and then the tracker is controlled to be powered off after being shut down. In a case where the tracker is powered off based on the control switch, the tracker informs the control switch that the positioning is completed, so that the tracker is controlled to be shut down, the control switch powers off the tracker after the tracker is shut down based on a message that the tracker completes the positioning. A method of controlling the tracker to be shut down includes, but not limited to, performing a soft shutdown operation inside the tracker, that is, the tracker is automatically shut down by itself, which can efficiently shut down the tracker. In an alternative implementation, shutting down the tracker may be implemented by the control switch. Illustratively, still referring to FIG. 2, as shown in FIG. 2, the tracker performs positioning, and in response to the positioning being completed, the tracker informs the control switch that the positioning is completed by a notification, which includes, but not limited to, notifying the control switch GreenPAK to power off the tracker, notifying the control switch GreenPAK to shut down the tracker, and notifying the control switch GreenPAK that the positioning is completed, that is, the control switch GreenPAK is informed of information indicating that the positioning is completed. Based on the received information indicating that the positioning is completed, the control switch GreenPAK powers off the tracker after the tracker is shut down, that is, the control switch GreenPAK turns off the power load switch via the GPIO configured to control power-on and power-off of the tracker, so as to power off the tracker. The tracker may be automatically shut down by itself, that is, the tracker performs a soft shutdown operation to be automatically shut down by itself, alternatively, the tracker may be shut down by the control switch GreenPAK via a GPIO configured to control shutdown of the tracker, so that the tracker is kept in a shutdown and power-off state.

In some implementations, controlling the tracker to be powered off includes: receiving, by the control switch, the information indicating that the positioning is completed from the tracker, and controlling the tracker to be powered off after a preset time based on the information indicating that the positioning is completed.

In some implementations, after completing the positioning, the tracker sends the information indicating that the positioning is completed, by a notification which includes, but not limited to, a power-off notification, a power-off instruction, or a notification indicating that the tracker is shut down, to the control switch, and the control switch receives the information sent by the tracker, and controls the tracker to be powered off after a preset time based on the information. The preset time may generally be several seconds, and the preset time may be determined based on a time duration for shutting down the tracker, for example, the preset time may be 7 seconds, 8 seconds, 10 seconds, or 12 seconds. The preset time is provided mainly for shutting down the tracker, so as to prevent the tracker from failing due to a forced shutdown of the tracker caused by being forcedly powered off. Illustratively, still referring to FIG. 2, as shown in FIG. 2, the control switch GreenPAK receives the information, indicating that the positioning is completed, sent by the tracker, and based on the information, after waiting for the preset time, that is, after the tracker is shut down, the control switch GreenPAK turns off the power load switch via the GPIO, which is configured to control power-on and power-off of the tracker, to power off the tracker, and the tracker may be automatically shut down by performing a soft shutdown operation, so that the tracker is kept in a shutdown and power-off state, which avoids the power consumption due the standby current and the power consumption due to the leakage current, thereby reducing the power consumption of the positioning module, and prolonging the standby time duration of the device.

According to the embodiment of the present disclosure, in response to the positioning condition being met, the tracker is controlled to be powered on, the tracker is controlled to be started up after being powered on, then the tracker performs positioning, the tracker is controlled to be shut down after the positioning is completed, and the tracker is controlled to be powered off after being shut down. According to the present disclosure, if positioning is desired, the tracker is controlled to be powered on, and the tracker is controlled to be started up after being powered on; if positioning is not desired, the tracker is shut down, and the tracker is controlled to be powered off after being shut down. Thus, the power consumption due to the standby current and the power consumption due to the leakage current can be avoided, so that the power consumption of the positioning module is reduced, and the standby time duration of the device is prolonged, resulting in a good balance between timeliness of positioning and the power consumption.

In an implementation, before controlling the tracker to be powered on in response to the positioning condition being met, the method further includes: acquiring a motion state of the tracker, and resetting the set time of the timer in response to the motion state changing.

In some implementations, still referring to FIG. 2, as shown in FIG. 2, the motion state of the tracker may be acquired by, but not limited to, adding a rotational motion sensor, which is a multifunctional position and motion measurement device, the rotational motion sensor can measure an angle with a precise resolution and detect a motion direction for detecting the motion state of the tracker, the motion state includes, but not limited to, a motion speed of the tracker and a change of the motion speed of the tracker, a motion direction of the tracker and a change of the motion direction of the tracker, and a motion trajectory of the tracker and a change of the motion trajectory of the tracker. Since the tracker is typically used as a component in a motion device of a terminal, which is not limited thereto, the motion state of the tracker is a motion state of the motion device. Then, the motion state of the tracker is acquired, and based on the motion state, the set time of the timer, i.e., the time interval of the timer, is reset in response to the motion state changing; and positioning is simultaneously performed, that is, the tracker is controlled to be powered on, and is controlled to be started up after being powered on. In some implementations, a duration of the set time may be inversely related to a frequency of changing of the motion state or a motion intensity, that is, the set time is relatively short in a case where the frequency of changing of the motion state or the motion intensity is relatively high, and the set time is relatively long in a case where the frequency of changing of the motion state or the motion intensity is relatively low. In some implementations, the frequency of changing refers to the number of times of changes of the motion state within a certain time, and the motion intensity refers to an intensity of a motion, for example, the motion intensity becomes higher as a motion speed becomes higher, and the motion intensity becomes lower as the motion speed becomes lower. In this way, positioning may be performed based on the set time adapted to the changes of the motion state, so that a frequency of positioning is adapted to the motion state. In general, the frequency of positioning is to be increased in response to the motion of the tracker changing frequently or the motion intensity of the tracker being relatively high, and the frequency of positioning is to be reduced in response to the motion of the tracker changing not frequently or the motion intensity of the tracker being relatively low, so that the frequency of positioning of the device is automatically adjusted based on the motion state of the device, and the tracker is controlled to perform positioning in response to the set time of the timer being reached. Thus, a good balance between timeliness of positioning and the power consumption is achieved, and the power consumption of the device is reduced as much as possible in a case of ensuring that the motion trajectory of the device is not lost. Compared to the positioning methods in the existing technology, the method according to the present disclosure enhances the flexibility of positioning, and can adjust the frequency of positioning in time by dynamically resetting the set time of the tracker as desired, so as to adjust the frequency of reporting the data of positioning, thereby avoiding the waste of the power consumption.

In an implementation, acquiring the motion state of the tracker and resetting the set time of the timer in response to the motion state changing includes: acquiring a motion direction of the tracker, and resetting the set time of the timer in response to the motion direction changing.

In some implementations, the motion direction of the tracker is acquired by, but not limited to, a rotational motion sensor, a direction angle of the tracker may be detected, so that the motion direction of the tracker may be acquired based on a change of the direction angle, and whether the motion direction of the tracker changes is determined based on the motion direction. For example, if the direction angle is less than or equal to a preset direction angle threshold ΔT, it is determined that the motion direction of the tracker does not change, that is, the tracker moves linearly; and if the direction angle is greater than ΔT, it is determined that the motion direction of the tracker changes, that is, the tracker moves non-linearly, and in a case where the motion direction changes, the set time of the timer is reset, the set time may be determined based on a specific positioning scenario, and positioning is simultaneously performed, that is, the tracker is controlled to be powered on during the timer being reset, and the tracker is controlled to be started up after being powered on for performing positioning. In some implementations, the preset direction angle threshold ΔT may be set as desired. In a positioning scenario for a relatively high precision, the preset direction angle threshold ΔT may be set relatively small, for example, the preset direction angle threshold ΔT may be set to be, but not limited to, a direction angle of 30°, a direction angle of 20°, or a direction angle of 10°, so that the tracker can be controlled to perform positioning in time in response to a relatively small change of the direction angle of the tracker. In a positioning scenario for a relatively low precision, the preset direction angle threshold ΔT may be set relatively large, for example, the preset direction angle threshold ΔT may be set to be, but not limited to, a direction angle of 45°, a direction angle of 60°, or a direction angle of 70°, so that the tracker is controlled to perform positioning merely in response to a relatively large change of the direction angle of the tracker. Thus, the tracker can be flexibly controlled to perform positioning as desired, and a good balance can be achieved between improving timeliness of positioning and reducing power consumption.

In some implementations, in a case where the motion direction does not change, that is, in a case where it is determined that the tracker moves linearly, the positioning performed by the tracker is controlled by a default time interval or an original time interval of the timer. In other implementations, whether the motion direction of the tracker changes may be determined by, but not limited to, GPS positioning, which is not limited herein. A method for determining whether the motion direction changes may be configured based on specific services and application scenarios.

According to the embodiment of the present disclosure, by acquiring the motion direction of the tracker, resetting the set time of the timer in response to the motion direction changing, and updating the frequency of positioning of the tracker by resetting the set time the tracker, the positioning is performed in time in response to determining that the motion direction of the tracker changes, and the frequency of positioning is adapted to the changes of the motion direction, so that flexible and dynamic positioning can be performed in time during the tracker moving in a case of ensuring that the motion trajectory of the device is not lost, which further reduces the power consumption of the device as much as possible.

In an implementation, acquiring the motion state of the tracker, and resetting the set time of the timer in response to the motion state changing includes: acquiring a motion speed of the tracker, and resetting the set time of the timer in response to the motion speed changing. In some implementations, the duration of the set time is inversely related to a magnitude of the motion speed.

In some implementations, the motion speed of the tracker is acquired by detecting the motion speed of the tracker by the rotational motion sensor, which is not limited thereto, and determining whether the motion speed changes, the set time of the timer is reset in a case where the motion speed changes, and the duration of the set time is inversely related to the magnitude of the motion speed, that is, the set time interval is relatively short in a case where the motion speed is relatively high, and the set time interval is relatively long in a case where the motion speed is relatively low. The set time may be determined based on a specific positioning scenario, and the tracker is controlled to perform positioning during the timer being reset, that is, the tracker is controlled to be powered on during the timer being reset, and the tracker is controlled to be started up after being powered on for performing positioning.

In some implementations, in a case where the motion speed does not change, the default time interval or the original time interval of the timer is used for timing triggering.

According to the embodiment of the present disclosure, by acquiring the motion speed of the tracker, resetting the set time of the timer in response to the motion speed changing, and updating the frequency of positioning of the tracker by resetting the set time of the tracker, the positioning is performed in time in response to the motion speed of the tracker changing, and the frequency of positioning is adapted to the motion speed, so that flexible and dynamic positioning can be performed in time during the tracker moving in a case of ensuring that the motion trajectory of the device is not lost, which further reduces the power consumption of the device as much as possible.

In an implementation, referring to FIG. 4 showing a schematic flowchart of specific operations of a tracking and positioning control method according to an embodiment of the present disclosure, resetting the set time of the timer in response to the motion speed changing includes at least one of: in response to the motion speed being not greater than a first speed threshold α and the tracker moving linearly, resetting the set time of the timer to N1; in response to the motion speed being greater than the first speed threshold α and less than a second speed threshold β and the tracker moving linearly, resetting the set time of the timer to N2, with N2<N1; or in response to the motion speed being not less than the second speed threshold β and the tracker moving linearly, resetting the set time of the timer to N3, with N3 <N2.

In some implementations, in a scenario where the tracker moving linearly, and in a case where the motion speed of the tracker is less than or equal to the first speed threshold α configured in advance, that is, in a case where the motion speed is not greater than the first speed threshold α and the tracker moves linearly, the set time of the timer is reset to N1, the first speed threshold α and N1 may be respectively set based on a specific application scenario; in a case where the motion speed is greater than the first speed threshold α and less than the second speed threshold β configured in advance, that is, in a case where the motion speed is greater than the first speed threshold α and less than the second speed threshold β and the tracker moves linearly, the set time of the timer is reset to N2, with N2<N1, that is, in a case where the motion speed becomes higher and the motion state of the tracker changes more frequently, the frequency of positioning of the tracker is increased by resetting and shortening the set time for positioning; and in a case where the motion speed is greater than or equal to the second speed threshold β configured in advance, that is, in a case where the motion speed is not less than the second speed threshold β and the tracker moves linearly, the set time of the timer is reset to N3, with N3 <N2, that is, in a case where the motion speed becomes more higher and the motion state of the tracker changes more and more frequently, the frequency of positioning of the tracker is further increased by resetting and further shortening the set time for positioning.

According to the embodiment of the present disclosure, during the tracker moving linearly, by self-adapting the frequency of the tracker for acquiring the data of positioning based on the motion speed, an adapted frequency of acquiring the data of positioning is configured based on the magnitude of the motion speed of the tracker, and the frequency of positioning is updated in time, so that the frequency of positioning is adapted to the motion speed, flexible and dynamic positioning can be performed in time during the tracker moving linearly in a case of ensuring that the motion trajectory of the device is not lost, which further reduces the power consumption of the device as much as possible.

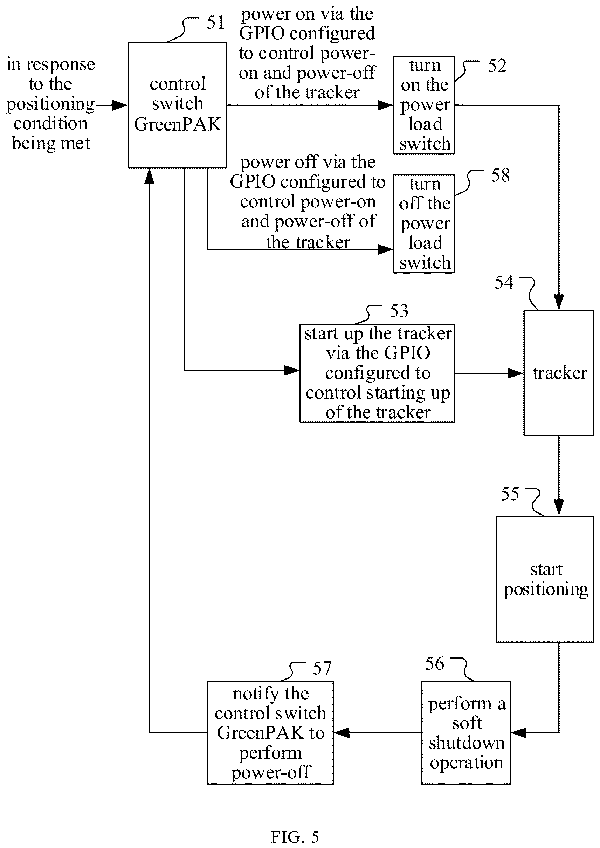

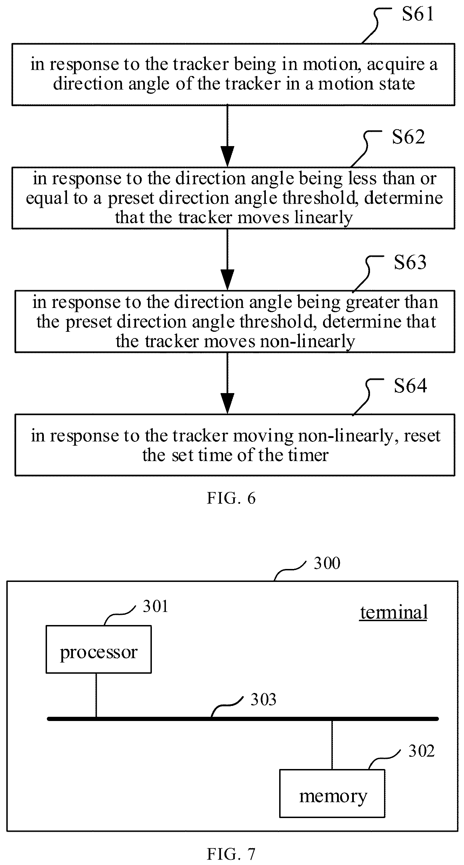

In an implementation, referring to FIG. 5 and FIG. 6 showing a sub-flowchart of a tracking and positioning control method according to an embodiment of the present disclosure, the method further includes: operation S61, in response to the tracker moving, acquiring a direction angle of the tracker in a motion state; operation S62, in response to the direction angle being less than or equal to a preset direction angle threshold, determining that the tracker moves linearly; operation S63, in response to the direction angle being greater than the preset direction angle threshold, determining that the tracker moves non-linearly; and operation S64, in response to the tracker moving non-linearly, resetting the set time of the timer.

In some implementations, in a case where the tracker moving, the direction angle of the tracker in the motion state is acquired, and in a case where the direction angle is less than or equal to the preset direction angle threshold, it is determined that the tracker moves linearly, that is, it is determined that the motion direction of the tracker does not change. In some implementations, the preset direction angle threshold is the preset direction angle threshold ΔT described above. In some implementations, in a case where the direction angle is greater than the preset direction angle threshold, it is determined that the tracker moves non-linearly, that is, the motion direction of the tracker changes, and the set time of the timer is reset as described above. The direction angle refers to a direction angle determined by taking a direction of a certain coordinate axis as a standard direction. The direction angle is generally less than 90 degrees and is formed between due north or due south and a target direction, and the direction angle generally refers to an angle (generally an acute angle) formed by rotating from due north or due south serving as a starting direction to the target direction with a position of an observer serving as a center. For example, the direction angle may be generally expressed as X degrees from north to east or X degrees from south to west, and if the direction angle is exactly 45 degrees, it indicates due southwest or due northeast.

According to the embodiment of the present disclosure, the direction angle of the tracker in the motion state is acquired in a case where the tracker is in motion, and it is determined that the tracker moves linearly in a case where the direction angle is less than or equal to the preset direction angle threshold; further, in a case where the direction angle is greater than the preset direction angle threshold, it is determined that the tracker moves non-linearly, the set time of the timer is reset in a case where the tracker moves non-linearly, so that, based on a motion trajectory of the tracker, the frequency of positioning of the tracker can be updated by resetting the set time of the tracker, the positioning can be performed in time, the frequency of positioning can be adapted to the changes of the motion trajectory, and flexible and dynamic positioning can be performed in time during the tracker moving in a case of ensuring that the motion trajectory of the device is not lost, which further reduces the p power consumption of the device as much as possible.

Referring to FIG. 7 showing a block diagram of a terminal according to an embodiment of the present disclosure, a terminal device 300 includes a processor 301 and a memory 302, and the processor 301 and the memory 302 are connected through a bus 303 which is, for example, an Inter-Integrated Circuit (I2C).

In particular, the processor 301 is configured to provide computing and control capabilities and supports the operation of the entire terminal. The processor 301 may be a Central Processing Unit (CPU), or another general-purpose processor, a Digital Signal Processor (DSP), an Application Specific Integrated Circuit (ASIC), a Field-Programmable Gate Array (FGPA) or another programmable logic device, a discrete gate or a transistor logic device, or a discrete hardware component. The general-purpose processor may be a microprocessor or any conventional processor.

In some implementations, the memory 302 may be a flash chip, a Read-Only Memory (ROM), a magnetic disk, an optical disk, a USB flash disk, or a mobile hard disk.

It should be understood by those of ordinary skill in the art that the structures illustrated in the block diagram of FIG. 7 are merely some structures related to the technical solution provided in the embodiment of the present disclosure, and do not constitute any limitation to the terminal applied with the technical solution provided in the embodiment of the present disclosure. Specifically, the terminal may include more or fewer components than those shown in FIG. 7, or some components may be combined, or arranged in a different way.

In some implementations, the processor is configured to run a computer program stored in the memory, and the processor executes the computer program to implement the tracking and positioning control method provided in the embodiment of the present disclosure.

It should be noted that those of ordinary skill in the art can clearly understand that, for convenience and simplicity of description, for a specific operating process of the terminal, reference may be made to a corresponding process in the tracking and positioning control method described above, which will not be repeated here.

An embodiment of the present disclosure further provides a computer-readable storage medium stored with at least one computer program, and the at least one computer program is executable by at least one processor to cause the at least one processor to implement the tracking and positioning control method provided in the embodiment of the present disclosure.

In some implementations, the storage medium may be an internal storage unit of the terminal described above, for example, the storage medium is a memory of the terminal. Alternatively, the storage medium may be an external storage device of the terminal, for example, the storage medium is a plug-in hard disk, a Smart Media Card (SMC), a Secure Digital (SD) card, or a flash card, which is provided in the terminal.

It should be understood by those of ordinary skill in the art that the functional modules/units for all or some of the operations in the method, or in the system or device disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a Central Processing Unit (CPU), a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, a Random Access Memory (RAM), an ROM, an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated signals such as carriers or other transmission mechanisms, and may include any information delivery medium.

It should be understood that the term "and/or" used in the description and the appended claims of the present disclosure refers to any combination and all possible combinations of one or more listed associated items, and includes all those combinations. It should be noted that, in the present disclosure, the terms "include", "comprise" or any other variation thereof are intended to indicate a non-exclusive inclusion, so that a process, method, article or system, which includes a series of elements, does not only include those elements listed but also include other elements which are not explicitly listed or the elements inherent in such process, method, article or system. If there are no more limitations, limiting an element by "including a..." does not exclude the existence of another identical element in the process, method, article, or system which includes the element.

The ordinal numbers of the embodiments of the present disclosure are merely for description, and do not indicate a preferential order of the embodiments. The above description is of the specific embodiments of the present disclosure, but the scope of the present disclosure is not limited thereto. Those ordinary skills in the art can easily think of various equivalent modifications or substitutions within the technical scope disclosed by the present disclosure, and the modifications or substitutions should be included in the scope of the present disclosure. Therefore, the scope of the present disclosure should be subject to the scope of the claims.

## Claims

1. A tracking and positioning control method, comprising:
in response to a positioning condition being met, controlling a tracker to be powered on, and controlling the tracker to be started up after the tracker is powered on; and
performing positioning by the tracker, controlling the tracker to be shut down in response to the positioning being completed, and controlling the tracker to be powered off after the tracker is shut down.

2. The tracking and positioning control method of claim 1, wherein the positioning condition being met comprises:
reaching a set time of a timer.

3. The tracking and positioning control method of claim 1 or 2, wherein controlling the tracker to be powered off comprises:
receiving, by a control switch, information indicating that the positioning is completed from the tracker, and controlling the tracker to be powered off after a preset time based on the information.

4. The tracking and positioning control method of claim 2, further comprising:
before controlling the tracker to be powered on, acquiring a motion state of the tracker, and resetting the set time of the timer in response to the motion state changing.

5. The tracking and positioning control method of claim 4, wherein acquiring the motion state of the tracker and resetting the set time of the timer in response to the motion state changing comprises:
acquiring a motion direction of the tracker, and resetting the set time of the timer in response to the motion direction changing.

6. The tracking and positioning control method of claim 4 or 5, wherein acquiring the motion state of the tracker and resetting the set time of the timer in response to the motion state changing comprises:
acquiring a motion speed of the tracker, and resetting the set time of the timer in response to the motion speed changing, wherein a duration of the set time is inversely related to a magnitude of the motion speed.

7. The tracking and positioning control method of claim 6, wherein resetting the set time of the timer in response to the motion speed changing comprises at least one of:
in response to the motion speed being not greater than a first speed threshold α and the tracker moving linearly, resetting the set time of the timer to N1;
in response to the motion speed being greater than the first speed threshold α and less than a second speed threshold β and the tracker moving linearly, resetting the set time of the timer to N2, with N2 <N1; or
in response to the motion speed being not less than the second speed threshold β and the tracker moving linearly, resetting the set time of the timer to N3, with N3 < N2.

8. The tracking and positioning control method of claim 7, further comprising:
in response to the tracker moving, acquiring a direction angle of the tracker in a motion state; and
in response to the direction angle being less than or equal to a preset direction angle threshold, determining that the tracker moves linearly.

9. The tracking and positioning control method of claim 8, further comprising:
in response to the direction angle being greater than the preset direction angle threshold, determining that the tracker moves non-linearly; and
in response to the tracker moving non-linearly, resetting the set time of the timer.

10. A terminal, comprising a processor, a memory, a computer program being stored by the memory and executable by the processor, and a data bus for enabling connection and communication between the processor and the memory, wherein the computer program is executed by the processor to cause the processor to implement the tracking and positioning control method of any one of claims 1 to 9.

11. A computer-readable storage medium stored with at least one computer program, wherein the at least one computer program is executable by at least one processor to cause the at least one processor to implement the tracking and positioning control method of any one of claims 1 to 9.
